**Europäisches Patentamt**

**European Patent Office**

**Office européen des brevets**

(11) Numéro de publication: **0 202 973 B1**

(12) **FASCICULE DE BREVET EUROPEEN**

(45) Date de publication du fascicule du brevet:
**12.07.89**

(51) Int. Cl.⁴: **B29C 49/64**, B29C 71/00

(21) Numéro de dépôt: **86400790.1**

(22) Date de dépôt: **14.04.86**

(54) Procédé et dispositif de renforcement d'une bague de bouteille en matière plastique.

(30) Priorité: **17.04.85 FR 8505775**

(43) Date de publication de la demande:
**26.11.86 Bulletin 86/48**

(45) Mention de la délivrance du brevet:
**12.07.89 Bulletin 89/28**

(84) Etats contractants désignés:
**AT BE CH DE FR GB IT LI LU NL SE**

(56) Documents cités:
**EP-A- 0 066 982**
**EP-A- 0 073 151**
**EP-A- 0 074 246**
**EP-A- 0 109 464**
**FR-A- 2 201 171**
**FR-A- 2 285 978**
**FR-A- 2 429 660**

(73) Titulaire: **DES EAUX MINERALES D'EVIAN: Société Anonyme, 22 Avenue des Sources, F-74503 Evian Cédex(FR)**

(72) Inventeur: **Bit, Claude, 16 avenue du Léman, F-74200 Thonon(FR)**

(74) Mandataire: **Orès, Bernard et al, Cabinet ORES 6, Avenue de Messine, F-75008 Paris(FR)**

Il est rappelé que: Dans un délai de neuf mois à compter de la date de publication de la mention de la délivrance du brevet européen toute personne peut faire opposition au brevet européen délivré, auprès de l'Office européen des brevets. L'opposition doit être formée par écrit et motivée. Elle n'est réputée formée qu'après paiement de la taxe d'opposition (Art. 99(1) Convention sur le brevet européen).

ACTORUM AG

## Description

L'invention a pour objet un procédé et un dispositif de renforcement d'une bague de bouteille en matière plastique et, plus particulièrement, un procédé et un dispositif pour accroître la résistance thermique de la bague du goulot d'une bouteille en polyéthylène téréphtalate (PET) à orientation biaxiale.

Le domaine d'application des récipients en polyéthylène téréphtalate, notamment des bouteilles en PET à orientation biaxiale ne cesse de croître et cela vraisemblablement en raison des bonnes caractéristiques de ces récipients tant sur le plan de la résistance mécanique et/ou thermique que sur celui de leur aspect, de leur capacité à former une barrière efficace aux gaz des boissons qu'ils contiennent ou encore de leur inocuité vis-à-vis des produits alimentaires qu'ils renferment, sans oublier les avantages sur le plan écologique résultant de ce que leur combustion a lieu sans dégagement de gaz nocifs.

On sait maintenant produire industriellement de manière satisfaisante de telles bouteilles, de même que l'on sait que les qualités rappelées ci-dessus sont dues principalement, -à l'exclusion de celles inhérentes à la nature de la résine-, à l'orientation biaxiale du matériau qui est mise en oeuvre lors de la fabrication, avec pour corollaire le fait que les parties de la bouteille qui ne sont pas soumises à cette orientation, comme la bague de col ou éventuellement le fond, ne présentent pas les qualités de résistance, en particulier de résistance thermique du reste du récipient.

Or si une telle résistance à la chaleur est importante pour la bouteille, elle l'est encore davantage pour la bague qui doit conserver ses caractéristiques dimensionnelles pour permettre la fermeture étanche, aussi bien dans le cas de bouchons à visser que de bouchons et/ou d'opercules à mater par pression, lorsque les bouteilles sont remplies de produits embouteillés à chaud ou de produits destinés à subir un traitement thermique de pasteurisation ou analogue.

On a déjà proposé, pour résoudre le problème posé de l'amélioration des caractéristiques de résistance de la bague d'une bouteille en PET, de soumettre celle-ci à un traitement thermique, de façon plus précise à un chauffage à une température comprise entre 120° et 180°C, puis à recuire les parties ainsi chauffées ou à leur faire subir un revenu à la température ambiante, ce traitement provoquant une cristallisation de la partie initialement non bi-orientée du col qui prend de ce fait une couleur d'un blanc laiteux et qui voit ses caractéristiques de résistance thermique améliorées (Brevet FR-A 2 429 660).

Un tel procédé n'apporte toutefois qu'une solution partielle au problème posé. En effet, la bague d'une bouteille en PET qui porte un filet de vissage est nécessairement d'épaisseur variable, de sorte que, si le traitement thermique n'est pas conduit de façon très spécifique, des déformations de la bague apparaissent, en particulier des retraits qui déforment le goulot, lequel n'ayant plus ni diamètre interne constant, ni face annulaire d'extrémité parfaitement plane, ne permet plus le bouchage satisfaisant.

C'est pour ces raisons que le titulaire du Brevet Français précédemment cité a proposé ultérieurement, dans la Demande de Brevet Européen EP-A 0 066 982, un procédé de renforcement de la bague d'une bouteille en PET bi-orienté dans lequel on chauffe ladite bague à une température comprise entre 140 et 170°C, puis on introduit un mandrin cylindrique d'un diamètre plus petit que celui de la bague dans l'ouverture de la bague ainsi chauffée, après quoi l'on procède au rétrécissement de la bague par soufflage d'air ou de gaz de refroidissement pour amener ladite bague au contact de la périphérie externe du mandrin, la bague étant refroidie pour opacifier la bague en blanc avant retrait du mandrin de la bague.

Dans ce procédé, par conséquent, le traitement thermique est conduit sur la bouteille, celle-ci étant simultanément entraînée en rotation pour un transfert de chaleur uniforme à la totalité de la bague.

Ce procédé, s'il permet effectivement de pallier certains des inconvénients rapportés ci-dessus, ne donne pas cependant, lui non plus, totalement satisfaction et cela parce que l'apport calorifique sur une bouteille dont la structure est différente au niveau de la bague (amorphe), à l'épaulement (état intermédiaire) et au corps (état bi-orienté) provoque, par un effet de mémoire de la résine, l'apparition de déformations locales dues au relâchement de contraintes préalablement établies lors de la formation de la bouteille par bi-orientation.

C'est, d'une façon générale, un but de l'invention de fournir un procédé et un dispositif de renforcement de la bague d'une bouteille en matière plastique, en particulier en polyéthylène téréphtalate à orientation biaxiale qui permettent de s'affranchir des inconvénients mentionnés du procédé connu par FR-A 2 429 660, en particulier de la nécessité d'un recuit d'un revenu.

C'est, aussi, un but de l'invention de fournir un tel procédé et un dispositif pour sa mise en œuvre qui trouvent application non plus sur des bouteilles mais sur des préformes de bouteilles en PET, en particulier dans une fabrication de bouteilles dite à "paraison froide" dans laquelle les phases de fabrication des bouteilles, par exemple par soufflage, peuvent être indépendantes et distinctes de celles des préformes, avec pour résultat une meilleure adaptation entr'elles des phases du processus général de fabrication.

C'est, encore, un but de l'invention de fournir un tel procédé et un dispositif pour sa mise en œuvre qui, tout en assurant une excellente qualité des produits finis, puissent être appliqués à des machines à cadence élevée, comme actuellement requis dans les usines d'embouteillage.

Le procédé selon l'invention, pour le renforcement de la bague du goulot d'une bouteille en matière plastique obtenue par façonnage d'une préforme, suivant lequel préalablement à l'opération de façonnage on introduit un mandrin dans l'embouchure de la préforme, on positionne ladite embouchure et le mandrin qu'elle enserre dans un moyen de chauffage présentant autour de la bague une surface de chauffe continue à température homogène et, tout en isolant thermiquement ladite bague de la zone adjacente de la préforme, on maintient l'ensemble dans ledit moyen de chauffage pendant une durée suffisante, de préférence juste suffisante pour que, compte tenu de la température qui y règne, l'on obtienne une cristallisation complète ou quasi complète de la bague, est caractérisé en ce que:

on extrait ensuite le mandrin et la bague de la préforme qui en est solidaire dudit moyen de chauffage;

on refroidit ladite bague maintenue sur le mandrin; et on retire ensuite seulement la préforme dudit mandrin.

La température régnant à l'intérieur du moyen de chauffage est avantageusement choisie pour correspondre au maximum, ou sensiblement au maximum, de la courbe de vitesse de cristallisation en fonction de la température de ladite matière plastique.

Dans le cas de l'application du procédé selon l'invention au renforcement de la bague du goulot d'une bouteille obtenue par façonnage avec orientation biaxiale d'une préforme en polyéthylène téréphtalate (PET), ladite température est comprise entre 150 et 170°C.

Dans une réalisation avantageuse, l'isolation thermique est obtenue par interposition d'un écran entre le moyen de chauffage et la zone de la préforme adjacente à la bague avec, complémentairement, projection de gaz ou d'air de refroidissement sur ladite zone, ledit écran étant déplaçable suivant l'axe du mandrin et comportant deux parties déplaçables latéralement l'une par rapport à l'autre pour livrer passage à la bague lors du positionnement du mandrin et de l'embouchure qui l'enserre dans ledit moyen de chauffage.

L'invention prévoit aussi que le refroidissement de la bague maintenue sur le mandrin soit conduit de manière telle qu'on obtienne, – en fonction des caractéristiques du mandrin et de la température de sortie de la préforme hors du mandrin –, un diamètre de débouchage de la bague qui soit celui requis pour la bouteille à la température ambiante et qui, en outre, évite tout risque de déformation ultérieure.

Par le procédé selon l'invention, la cristallisation de la bague a lieu par chauffage externe et interne de ladite bague.

L'invention vise aussi un dispositif pour la mise en œuvre de ce procédé, comprenant un moyen de chauffage, un mandrin propre à être introduit dans l'embouchure de la préforme et des moyens pour isoler thermiquement ledit moyen de chauffage de la zone de la préforme adjacente à ladite bague lorsque celle-ci est chauffée, caractérisé en ce que le moyen de chauffage est un bloc percé d'une cavité de forme correspondante à celle de la bague de la préforme et dans lequel est monté à coulissement le mandrin et en ce qu'il comporte aussi des moyens de projection de gaz ou d'air de refroidissement sur ladite zone de la préforme extérieure à ladite cavité et sur ladite bague lorsque celle-ci est extraite de ladite cavité et encore positionnée sur ledit mandrin.

Dans une forme de réalisation avantageuse, lesdits moyens d'isolation thermique sont mobiles et agencés de manière telle que dans la condition en laquelle la bague est logée dans ladite cavité ils forment écran entre ledit moyen de chauffage et ladite zone de la préforme adjacente à la bague et extérieure à ladite cavité tandis que, dans la condition en laquelle ladite bague est maintenue sur ledit mandrin mais hors de ladite cavité, lesdits moyens font écran entre ledit moyen de chauffage et la bague.

La cavité du moyen de chauffage dans laquelle est propre à être logée la bague est avantageusement conformée pour ménager une paroi interne formant sensiblement une surface enveloppe de la surface externe de ladite bague tout en permettant son démoulage direct.

Pour un positionnement satisfaisant de la bague par rapport au mandrin la partie d'extrémité de ce dernier propre à coopérer avec l'embouchure de la préforme présente un épaulement de butée pour l'extrémité annulaire plane de la bague de la préforme.

Le moyen de chauffage est amené à la température voulue de toute manière appropriée, par exemple à l'aide d'un fluide caloporteur circulant dans le bloc, à l'aide d'une résistance électrique, etc., des moyens de commande et de contrôle de la température étant en outre prévus.

L'invention sera mieux comprise par la description qui suit, faite à titre d'exemple et en référence aux dessins annexés dans lesquels:

– la figure 1 est une vue en coupe d'une préforme de bouteille en PET;

– la figure 2 est une vue schématique d'un dispositif selon l'invention illustrant une première phase du procédé selon l'invention;

– la figure 3 est une vue de détail, à plus grande échelle, d'une partie du dispositif selon l'invention enfermant la bague d'une préforme;

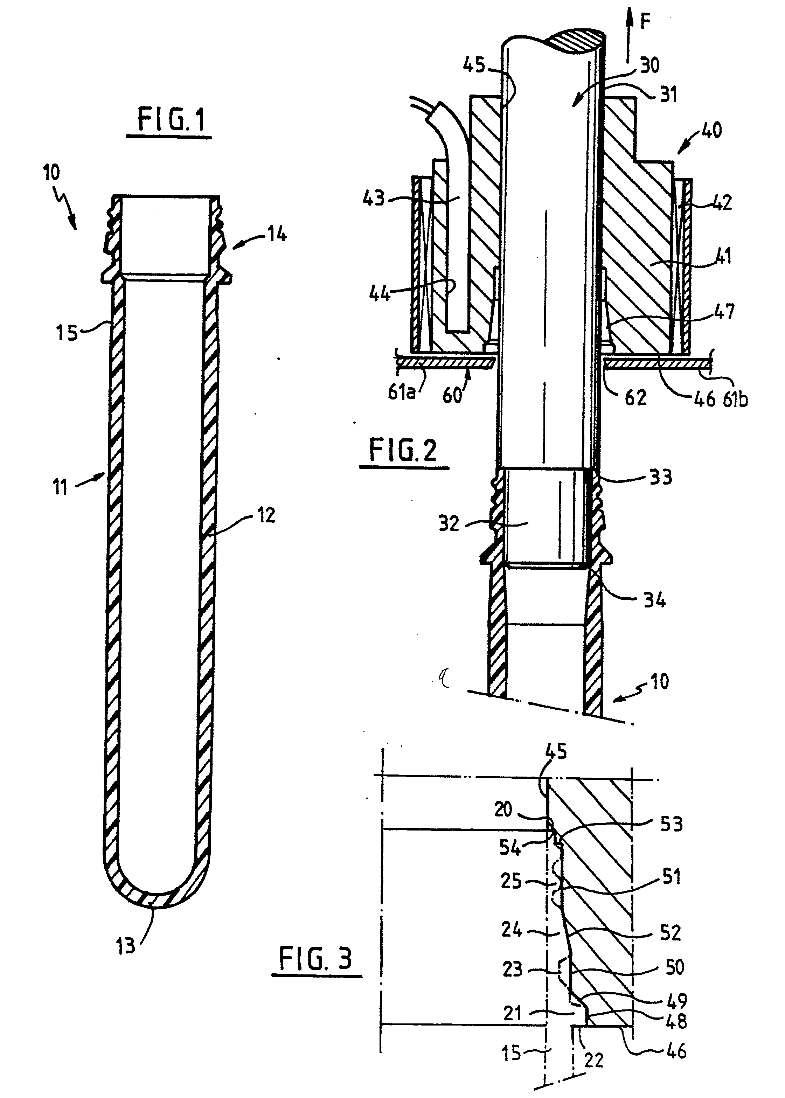

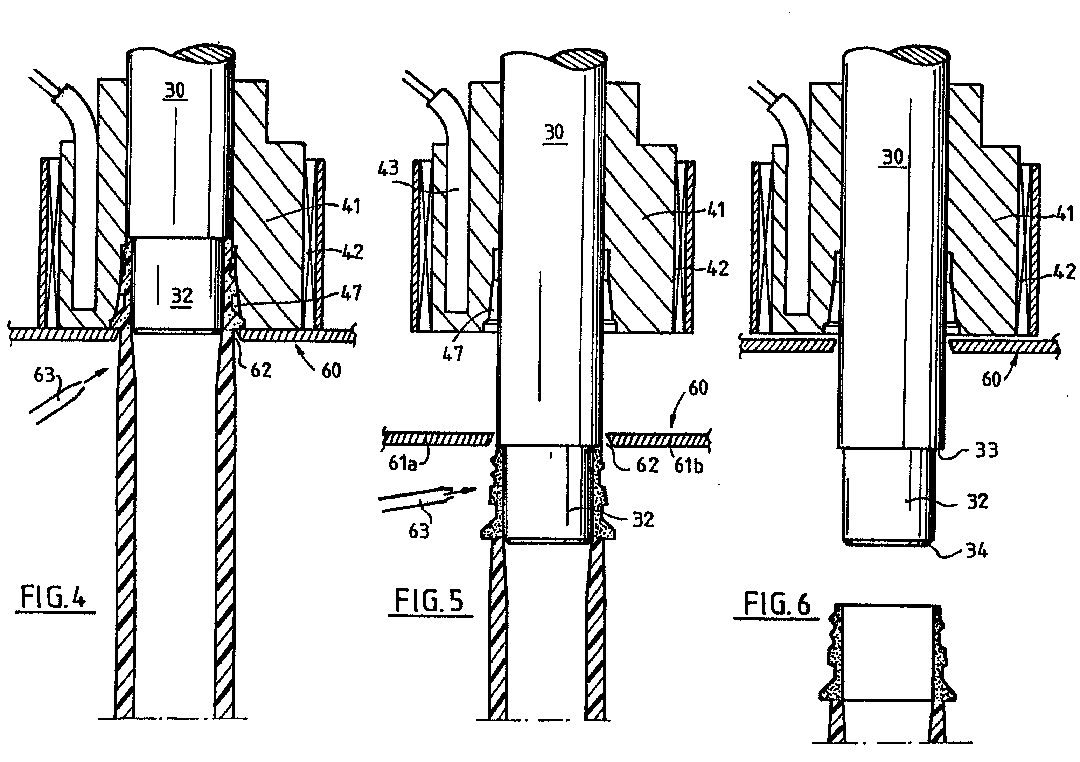

. la figure 4 est une vue analogue à celle de la figure 2 mais pour une autre phase du procédé;

. la figure 5 est une vue analogue à celle de la figure 4 mais pour encore une autre phase du procédé;

. la figure 6 est une vue analogue à celle des figures 4 et 5, mais pour encore une autre phase du procédé.

On se réfère d'abord à la figure 1 qui montre une préforme 10 de bouteille en matière plastique, avantageusement une bouteille en polyéthylène téréphtalate comprenant un corps 11, sous forme d'un tube 12 à fond hémisphérique 13, et une bague 14 raccordée au corps 11 par une zone tronconique 15. Comme mieux visible sur la figure 3, la bague 14 est conformée à partir de la zone 15 et en direction de l'extrémité annulaire plane 20 de l'embouchure suivant une collerette 21 ménageant avec la zone 15 un épaulement 22, ladite collerette à section droite sensiblement trapézoïdale se poursuivant par une zone cylindrique 23 de plus petit diamètre, puis une partie tronconique 24 reliée à l'extrémité annulaire 20 par le filet de vissage 25.

A titre d'exemple, et sans que cette indication ait quelque caractère limitatif que ce soit, une préforme en polyéthylène téréphtalate, telle que décrite ci-dessus, a une longueur totale d'environ 170 mm, un diamètre externe d'environ 27 mm, un diamètre interne d'environ 20 mm, la longueur de la bague étant de l'ordre de 20 mm et le plus grand rayon externe de la collerette 21 d'environ 30 mm, pour un diamètre interne, au droit de ladite collerette, d'environ 20 mm.

Une telle préforme, fabriquée par compression ou injection à la température de fusion de la résine, de l'ordre de 270°C, puis refroidissement très rapide, est destinée à être façonnée en une bouteille par un processus en soi connu, par exemple par soufflage provoquant une bi-orientation de la résine.

Dans un procédé, dit à "paraison chaude", on opère en continu, généralement sur une seule et même machine pour obtenir la préforme par injection, puis effectuer le soufflage, puis procéder à un traitement thermique de thermo-fixation destiné à faire disparaître les contraintes créées au cours de l'étape précédente.

Dans un autre procédé, dit à "paraison froide", les ébauches ou préformes formées ou injectées sont refroidies à la température ambiante puis stockées pour un traitement ultérieur de mise en forme. On peut ainsi adapter entr'elles des machines d'injection et de soufflage dont les cadences peuvent être différentes et c'est à un tel procédé de fabrication à "paraison froide" que s'applique la présente invention pour conférer à une bague de bouteille en PET, -laquelle bague reste à l'état amorphe aussi bien au cours du façonnage par bio-orientation que lors de la thermo-fixation-, les qualités requises de résistances mécanique et thermique par un procédé décrit ci-après et qui est conduit sur la préforme.

Selon l'invention, la bague de la préforme est amenée à une température correspondant sensiblement au pic de la courbe de la vitesse de cristallisation du PET en fonction de la température, c'est-à-dire entre 150 et 170°C, et cela de manière à, d'une part, ne pas provoquer la cristallisation sphérulitique du reste de la préforme, c'est-à-dire avec isolation thermique et/ou de refroidissement de la zone de la préforme adjacente à la bague et, d'autre part, avec un mandrin introduit dans l'embouchure de ladite bague pour favoriser le traitement thermique tout en s'opposant à toute modification dimensionnelle du diamètre de la bague, aussi bien lors de la mise en température qu'au cours du refroidissement qui suit la cristallisation et qui est effectué alors que la bague cristallisée est maintenue sur le mandrin.

De façon avantageuse le mandrin est à température supérieure à la température ambiante lorsqu'il est amené à coopérer avec l'embouchure de la préforme, de sorte que lorsque la bague de cette dernière et le mandrin qu'elle enserre sont positionnés dans un moyen de chauffage de forme conjuguée de celle de la bague celle-ci est chauffée à la fois intérieurement et extérieurement avec pour conséquence un meilleur rendement énergétique et une diminution du temps de traitement.

Celui-ci peut être de l'ordre de une à trois minutes mais varie bien entendu en fonction des dimensions de la bague et de la température exacte du moyen de chauffage.

Il en est de même en ce qui concerne la durée du refroidissement après cristallisation sphérulitique de la bague, qui peut être de l'ordre de deux à deux minutes trente secondes, c'est-à-dire suffisante pour amener la bague cristallisée à une température de l'ordre de 40 à 50°C, température à laquelle l'extraction de la préforme hors du mandrin peut être effectuée sans risque de déformations ultérieures de la bague, notamment en ce qui concerne son diamètre de débouchage.

Le dispositif pour la mise en oeuvre de l'invention est illustré sur les figures 2 à 6.

Il comprend un mandrin 30 en métal bon conducteur de la chaleur, par exemple en un alliage de cuivre et de béryllium, à corps 31 cylindrique et extrémité 32 également cylindrique mais de plus petit diamètre que le corps 31 pour ménager un épaulement 33 à une distance de son extrémité libre chanfreinée 34 correspondant sensiblement à la longueur de la bague 14 de la préforme 10.

Le mandrin 30 est monté à coulissement dans le forage longitudinal 45 d'un moyen de chauffage 40 constitué par un bloc 41 en matériau bon conducteur de la chaleur, par exemple en aluminium ou, de préférence, en un matériau assurant à la fois une bonne conduction thermique et une bonne compatibilité de glissement avec le matériau constitutif du mandrin. Le bloc 41 est muni d'un organe de chauffage 42 représenté ici en tant que résistance électrique périphérique, ladite résistance 42 étant commandée par une sonde de régulation 43 logée dans un forage 44 du bloc 41 et reliée à des organes de commande, non représentés.

Dans une variante, non représentée, la sonde de régulation est reliée à des organes de commande de circulation d'un fluide caloporteur dans le bloc 41.

Selon l'invention, également, le forage longitudinal 45 débouche, au voisinage de la face d'extrémité 46 du bloc 41 perpendiculaire à son axe, dans une cavité 47 dudit bloc 41, de révolution autour de l'axe du forage 45 et dont la forme, comme bien visible sur la figure 3, est conjuguée de celle de la bague 14. Dans la forme de réalisation décrite et représentée, appliquée à une bague du type MCA 2 de 28, la cavité 47 présente ainsi, à partir du bord libre 46 du bloc 41, une première zone cylindrique 48 dont le diamètre est sensiblement le même que le diamètre externe de la collerette 21 de la bague de la préforme, ladite partie cylindrique se poursuivant par une partie tronconique 49, elle-même reliée à une partie cylindrique 50 de plus petit diamètre que la partie 48. Ladite partie cylindrique 50 est à son tour reliée à une partie cylindrique de plus petit diamètre qu'elle, 51, par une partie tronconique 52 ayant sensiblement les mêmes dimensions que la partie tronconique 24 de la bague 14. La partie cylindrique 51, dont le diamètre est légèrement supérieur au diamètre des filets de la bague, se raccorde au forage 45 par un redan à angle droit 53 qui limite une butée d'extrémité 54, le diamètre de ce redan correspondant au diamètre à fond de filet de la bague. Grâce à cette configuration de la cavité 47 la surface externe de la bague 14 peut être amenée, autant que faire se peut, au contact de la face interne de ladite cavité tout en permettant le mouvement relatif de la bague par rapport à la cavité pour un démoulage direct.

Pour l'exécution de ce mouvement, c'est-à-dire pour l'amenée de la bague 14 dont on souhaite élever la température afin de provoquer sa cristallisation sphérulitique dans le bloc 41, l'invention prévoit, figure 2, de faire coopérer le mandrin 30 et l'embouchure de la préforme 10 jusqu'à butée de la zone annulaire d'extrémité 20 de la bague contre l'épaulement 33 du mandrin puis, à partir de la condition montrée sur la figure 2, de déplacer le mandrin dans le sens de la flèche F, c'est-à-dire celui qui tend à entraîner la préforme 10 vers le corps chauffant 41, le mouvement étant poursuivi jusqu'à ce que l'on obtienne la condition montrée sur la figure 4, c'est-à-dire en laquelle la bague 14 est logée en totalité à l'intérieur de la cavité 47 du corps chauffant 41, la face annulaire 20 de la bague étant au contact de la butée 54 de la cavité 47.

La bague est alors maintenue dans la cavité 47 pendant le temps nécessaire pour effectuer sa cristallisation complète et, de préférence, juste pendant ce temps. A titre d'exemple, et sans que cette indication ait quelque caractère limitatif que ce soit, de bons résultats ont été obtenus en deux minutes pour une bague du type M C A 2 de 28 et une température du bloc 41 de l'ordre de 160°C.

L'invention prévoit, complémentairement, de protéger thermiquement le reste de la préforme pendant toute la durée de l'opération de cristallisation et, dans ce but, le dispositif comprend un écran thermiquement isolant 60, avantageusement en deux parties 61a, 61b découpées à leur périphérie interne suivant une ouverture 62 d'un diamètre très légèrement supérieur au diamètre de la partie du corps de la préforme située sous la collerette 21, c'est-à-dire à la partie tronconique 15. Les deux parties 61a et 61b peuvent être déplacées d'une part, suivant l'axe du mandrin et, d'autre part, latéralement l'une par rapport à l'autre pour livrer passage à la bague 14 lors du mouvement du mandrin qui amène ladite bague dans la cavité 47.

En outre, des moyens de projection de gaz ou d'air de refroidissement montrés schématiquement en 63 et dirigés alors sur la zone 15 de raccord de la bague au corps de la préforme, limitent l'influence du traitement thermique à la bague de la préforme seulement.

On obtient ainsi, grâce au dimensionnement de la zone utile 32 du mandrin sensiblement égale à la hauteur de la bague, d'une part, et grâce à l'utilisation de l'écran 60 et des buses de projection d'air 63, d'autre part, un apport de chaleur limité avec précision à la partie à cristalliser de la bague, la séparation franche du point de vue thermique de la bague du reste de la préforme étant favorable aux traitements ultérieurs de soufflage avec bi-orientation et de thermo-fixation du corps et de l'épaule de la bouteille.

A la fin de la phase de cristallisation de la bague, - dont la durée est faible en raison de la grande surface de transfert de chaleur aussi bien externe qu'interne, le mandrin étant en relation de conductivité thermique avec le bloc 41-, le mandrin 30 est actionné dans le sens inverse de la flèche F, pour extraire la bague 14 de la cavité 47, en provoquant simultanément le déplacement de l'écran 60 et son ouverture pour laisser passer le mandrin accompagné de la bague cristallisée. On provoque aussi l'éloignement de l'extrémité du mandrin du moyen de chauffage 41, figure 5. Dans la condition montrée sur cette figure, c'est-à-dire celle de la bague 14 hors de la cavité 47, les buses 63 sont alors orientées pour projeter un jet circulaire d'air ou de gaz de refroidissement sur ladite bague, cristallisée comme illustré sur le dessin, la présence de l'extrémité 32 du mandrin 30 à l'intérieur de la bague au cours de cette phase de refroidissement assurant le calibrage du diamètre intérieur et la conservation de la forme de la bague, en particulier de la planéité de sa partie d'extrémité annulaire 20.

La durée de la phase de refroidissement est déterminée par la température que l'on souhaite voir atteindre à la bague préalablement à l'extraction de la préforme hors du mandrin.

Si l'on choisit pour cette température une valeur de l'ordre de 40 à 50°C, la durée de la phase de refroidissement peut être de l'ordre de deux minutes à deux minutes trente secondes.

Les caractéristiques de la partie 32 du mandrin, notamment ses caractéristiques dimensionnelles, sont choisies de manière telle que l'on obtienne, pour cette température, le diamètre de débouchage que l'on souhaite donner à la bouteille terminée lorsque celle-ci sera revenue à la température ambiante. On procède alors à l'extraction de la préforme, figure 6, la température de la bague étant alors suffisamment faible pour éviter tout risque de déformation ultérieure.

La présence de l'écran 60 au voisinage des buses 63 lors de la projection d'air de refroidissement isole le bloc de chauffage 41 et la partie de mandrin extérieure audit bloc du jet d'air froid, de sorte qu'immédiatement après extraction de la préforme à bague cristallisée hors du mandrin, une nouvelle préforme peut être mise en place sur le mandrin et le cycle peut recommencer avec un mandrin à température nettement supérieure à la température ambiante.

Dans une réalisation, non représentée, le mandrin peut comporter lui aussi des moyens de chauffage, indépendants de ceux du bloc 41.

Quelle que soit la réalisation, les matériaux constitutifs du bloc 41 et du mandrin 30 sont choisis pour présenter de bonnes charactéristiques de conductibilité thermique, ainsi que de bonnes caractéristiques mécaniques, notamment eu égard aux problèmes de frottement, aux températures de fonctionnement envisagées.

## Revendications

1. Procédé pour le renforcement de la bague du goulot d'une bouteille en matière plastique obtenue par façonnage d'une préforme suivant lequel, préalablement à l'opération de façonnage, on introduit un mandrin (30) dans l'embouchure de la préforme, on positionne ladite embouchure et le mandrin qu'elle enserre dans un moyen de chauffage (41), présentant autour de la totalité de la bague une surface de chauffe continue à température homogène et, tout en isolant thermiquement ladite bague de la zone adjacente de la préforme, on maintient l'ensemble dans ledit moyen de chauffage pendant une durée suffisante, de préférence juste suffisante, pour que, compte tenu de la température qui y règne, l'on obtienne une cristallisation complète ou quasi complète de la bagne (14) caractérisé en ce que:

   – on extrait ensuite le mandrin et la bague de la préforme qui en est solidaire dudit moyen de chauffage;

   – on refroidit ladite bague maintenue sur le mandrin de sorte que les opérations sont effectuées avec la bague positionnée sur la mandrin; et

   – on retire ensuite seulement la préforme dudit mandrin.

2. Procédé selon la revendication 1, caractérisé en ce que la température du moyen de chauffage est choisie pour correspondre sensiblement au maximum de la courbe représentative de la vitesse de cristallisation en fonction de la température de ladite matière plastique.

3. Procédé selon la revendication 1 ou la revendication 2, pour le renforcement de la bague du goulot d'une bouteille obtenue par façonnage avec orientation biaxiale d'une préforme en polyéthylène téréphtalate (PET), caractérisé en ce que la température du moyen de chauffage est comprise entre 150 et 170°C.

4. Procédé selon la revendication 1, caractérisé en ce qu'on réalise l'isolation thermique par interposition d'un écran (60) entre le moyen de chauffage (41) et la zone (15) de la préforme adjacente à la bague (14) avec, complémentairement, projection de gaz ou d'air de refroidissement sur ladite zone, ledit écran étant déplaçable suivant l'axe du mandrin et comportant deux parties (61a, 61b) déplaçables latéralement l'une par rapport à l'autre pour livrer passage à la bague lors du positionnement du mandrin et de l'embouchure qui l'enserre dans ledit moyen de chauffage.

5. Dispositif pour le renforcement de la bague du goulot d'une bouteille en matière plastique obtenue par façonnage d'une préforme par mise en œuvre du procédé selon l'une quelconque des revendications 1 à 4, comprenant un moyen de chauffage, un mandrin (30) propre à être introduit dans l'embouchure de la préforme et des moyens (60) pour isoler thermiquement ledit moyen de chauffage (41) de la zone (15) de la préforme adjacente à ladite bague lorsque celle-ci est chauffée, caractérisé en ce que le moyen de chauffage (41) est un bloc percé d'une cavité (47) de forme correspondante à celle de la bague de la préforme et dans lequel est monté à coulissement le mandrin (30) et en ce qu'il comporte aussi des moyens (63) de projection de gaz ou d'air de refroidissement sur ladite zone de la préforme extérieure à ladite cavité et sur ladite bague lorsque celle-ci est extraite de ladite cavité et encore positionnée sur ledit mandrin.

6. Dispositif selon la revendication 5, caractérisé en ce que lesdits moyens d'isolation thermique (60) sont mobiles et agencés de manière telle que, dans la condition en laquelle la bague (14) est logée dans ladite cavité (47) ils forment écran entre ledit moyen de chauffage (41) et ladite zone (15) de la préforme adjacente à la bague et extérieure à ladite cavité tandis que, dans la condition en laquelle ladite bague est maintenue sur ledit mandrin mais hors de ladite cavité, lesdits moyens font écran entre ledit moyen de chauffage et la bague.

7. Dispositif selon la revendication 5, caractérisé en ce que ladite cavité (47) est conformée pour ménager une paroi interne formant sensiblement une surface enveloppe de la surface externe de ladite bague (14) tout en permettant son démoulage direct.

8. Dispositif selon l'une quelconque des revendications 5 à 7, caractérisé en ce que la partie d'extrémité (32) du mandrin (30) propre à coopérer avec l'embouchure de la préforme présente un épaulement de butée (33) pour l'extrémité annulaire plane (20) de la bague de la préforme.

9. Dispositif selon l'une quelconque des revendications 5 à 8, caractérisé en ce que le bloc (41) est muni de moyens de mise en température et de moyens (43) de commande et de contrôle de la température dudit bloc (41).

10. Dispositif selon la revendication 9, caractérisé en ce que lesdits moyens de mise en température sont constitués par une résistance électrique (42) ou un moyen de circulation de fluide caloporteur ou analogue.

**Patentansprüche**

1. Verfahren zum Aussteifen des Halsringes einer durch Formen eines Vorformlings erhaltenen Kunststoffflasche, bei welchem vor dem Arbeitsgang des Formens ein Dorn (30) in die Öffnung des Vorformlings eingeführt wird, die Öffnung und der Dorn positioniert werden, wobei die Öffnung den Dorn innerhalb einer Heizeinrichtung (41) umschließt und dabei um den ganzen Ring herum eine kontinuierliche Heizfläche für homogene Temperatur aufweist und, bei Wärmeisolieren des Ringes von dem angrenzenden Bereich des Vorformlings die Gesamtheit in der Heizeinrichtung während einer ausreichenden Zeitdauer, vorzugsweise gerade ausreichenden, gehalten wird, für welche unter Berücksichtigung der dort herrschenden Temperatur eine vollständige oder quasi-vollständige Kristallisation erhalten wird, dadurch gekennzeichnet, daß

   – anschließend der mit dem Ring des Vorformlings zusammenhängende Dorn aus der Heizeinrichtung herausgezogen wird

   – der auf dem Dorn gehaltene Ring so abgekühlt wird, daß die Arbeitsgänge mit dem Dorn positionierten Ring durchgeführt werden, und

   – anschließend nur der Vorformling von dem Dorn abgezogen wird.

2. Verfahren nach Anspruch 1, dadurch gekennzeichnet, daß die Temperatur der Heizeinrichtung so gewählt wird, daß sie etwa dem Maximum der typischen Kurve der Abhängigkeit der Kristallisationsgeschwindigkeit von der Temperatur für diesen Kunststoff entspricht.

3. Verfahren nach Anspruch 1 oder 2, zum Aussteifen des Halsringes einer Flasche, die durch Formen mit zweiachsiger Orientierung eines Vorformlings aus Polyethylenterephthalat (PETP) erhalten wird, dadurch gekennzeichnet, daß die Temperatur der Heizeinrichtung zwischen 150 und 170°C liegt.

4. Verfahren nach Anspruch 1, dadurch gekennzeichnet, daß das Wärmeisolieren durch Dazwischensetzen eines Schirmes (60) zwischen der Heizeinrichtung (41) und an den Ring (14) angrenzenden Bereich (15) des Vorformlings ausgeführt wird, ergänzend Kühlgas oder Kühlluftausstoß auf diesen Bereich gerichtet wird, wobei der Schirm entlang der Dornachse verstellbar ist und zwei Teile (61a, 61b) einschließt, die seitlich gegeneinander verstellbar sind, um während des Positionierens des Dornes und der Öffnung, die den Dorn in der Heizeinrichtung umschließt, den Ring durchzulassen.

5. Vorrichtung zur Durchführung des Verfahrens nach irgendeinem der vorhergehenden Ansprüche 1 bis 4 zum Aussteifen des Halsringes einer durch Formen eines Vorformlings erhaltenen Kunststofflasche, wobei die Vorrichtung eine Heizeinrichtung, einen zum Einführen in die Öffnung des Vorformlings geeigneten Dorn (30) und Mittel (60) zum Wärmeisolieren der Heizeinrichtung (41) von dem an den Ring angrenzenden Bereich (15) des Vorformlings, wenn der Ring aufgeheizt wird, aufweist, dadurch gekennzeichnet, daß die Heizeinrichtung (41) ein von einem Hohlraum durchbrochener Block ist, wobei die Form des Hohlraumes jener des Ringes des Vorformlings entspricht und wobei der Dorn (30) in dem Block verschiebbar montiert ist, und daß die Vorrichtung auch Mittel (63) zum Ausstoßen von Kühlgas oder Kühlluft auf den Bereich des Vorformlings außerhalb des Hohlraumes und auf den Ring, wenn der Ring aus dem Hohlraum herausgezogen wird und noch auf dem Dorn positioniert ist, aufweist.

6. Vorrichtung nach Anspruch 5, dadurch gekennzeichnet, daß die Mittel zum Wärmeisolieren (60) beweglich und derart angeordnet sind, daß sie, falls der Ring (14) in dem Hohlraum (47) untergebracht ist, einen Schirm zwischen der Heizeinrichtung (41) und dem an den Ring angrenzenden und außerhalb des Hohlraumes liegenden Bereich (15) des Vorformlings bilden, wogegen, falls der Ring auf dem Dorn, jedoch außerhalb des Hohlraumes gehalten ist, diese Mittel zwischen der Heizeinrichtung und dem Ring eine Abschirmung bilden.

7. Vorrichtung nach Anspruch 5, dadurch gekennzeichnet, daß der Hohlraum (47) zum Anbringen einer inneren Seitenwandung ausgebildet ist, wobei annähernd eine Hüllfläche der äußeren Oberfläche des Ringes (14) ausgebildet wird, dessen direktes Entnehmen aus der Form mithin ermöglicht wird.

8. Vorrichtung nach irgendeinem der Ansprüche 5 bis 7, dadurch gekennzeichnet, daß der zum Zusammenwirken mit der Öffnung des Vorformlings geeignete Endteil (32) des Dornes (30) eine Anschlagschulter (33) für den ringförmigen, glatten Rand (20) des Ringes des Vorformlings aufweist.

9. Vorrichtung nach irgendeinem der Ansprüche 5 bis 8, dadurch gekennzeichnet, daß der Block (41) mit Mitteln zum Aufheizen und mit Mitteln (43) zum Steuern und Überprüfen der Temperatur des Blockes (41) versehen ist.

10. Vorrichtung nach Anspruch 9, dadurch gekennzeichnet, daß die Mittel zum Aufheizen von einem elektrischen Widerstand (42) oder von einem Mittel zum Zirkulieren von Wärmeübertragungsflüssigkeit oder ähnlichem gebildet werden.

**Claims**

1. Method for the reinforcement of the neck of a plastics bottle obtained by shaping a preform, in which, prior to the shaping operation, a mandrel (30) is introduced into the mouth of the preform, said mouth and the mandrel which it grips are positioned in a heating means (41) having about the whole of the neck a continuous heating surface at a homogeneous temperature and, while thermally insulating said neck from the adjacent zone of the preform, the assembly is held in said heating means for a sufficient time, preferably just sufficient, so that, taking into account the temperature which prevails therein, complete or substantially complete crystallization of the neck (14) is obtained, characterized in that,
– the mandrel and the neck of the preform fast therewith are then removed from the heating means;
– said neck held on the mandrel is cooled so that the operations are carried out with the neck positioned on the mandrel; and
– only then is the preform removed from the mandrel.

2. Method according to claim 1, characterized in that the temperature of the heating means is chosen to correspond substantially to the maximum of the representative curve of the crystallization rate as a function of the temperature of said plastics material.

3. Method according to claim 1 or claim 2, for the reinforcement of the neck of a bottle obtained by shaping with biaxial orientation of a terephtalate polyethylene (PTE) preform, characterized in that the temperature of the heating means is between 150 and 170°C.

4. Method according to claim 1, characterized in that heat insulation is provided by interposing a screen (60) between the heating means (41) and the zone (15) of the preform adjacent the neck (14) with, complementarily, the projection of cooling gas or air on said zone, said screen being movable along the axis of the mandrel and comprising two parts (61a, 61b) movable laterally with respect to each other for allowing the neck to pass during positioning of the mandrel and of the mouth which encloses it in said heating means.

5. Device for the reinforcement of the neck of a plastics material bottle obtained by shaping a preform using the method according to any one of claims 1 to 4, comprising a heating means, a mandrel (30) adapted to be introduced into the mouth of the preform and means (60) for thermally insulating said heating means (41) from the zone (15) of the preform adjacent said neck when the latter is heated, characterized in that the heating means (41) is a block pierced with a cavity (47) of a shape corresponding to that of the neck of the preform and in which the mandrel (30) is slidably mounted and in that it also comprises means (63) for projecting cooling gas or air on said zone of the preform outside said cavity and on said neck when the latter is removed from said cavity and still positioned on said mandrel.

6. Device according to claim 5, characterized in that said thermal insulating means (60) are movable and are adapted so that, in the condition in which the neck (14) is housed in said cavity (47), they form a screen between said heating means (41) and said zone (15) of the preform adjacent the neck and outside said cavity, whereas, in the condition in which said neck is held on said mandrel but outside said cavity, said means form a screen between said heating means and the neck.

7. Device according to claim 5, characterized in that said cavity (47) is shaped so as to provide an internal wall forming substantially an envelope surface of the external surface of said neck (14) while allowing direct removal from the mould.

8. Device according to any one of claims 5 to 7, characterized in that the end portion (32) of the mandrel (30) adapted for cooperating with the mouth of the preform has an abutment shoulder (33) for the flat annular end (20) of the neck of the preform.

9. Device according to any one of claims 5 to 8, characterized in that the block (41) is provided with temperature raising means and means (43) for controlling and monitoring the temperature of said block (41).

10. Device according to claim 9, characterized in that said temperature raising means are formed by an electric resistance (42) or a heat-carrying fluid flow means or similar.

FIG.1

FIG.2

FIG.3

FIG.4    FIG.5    FIG.6

EP 0 202 973 B1